# EUROPEAN PATENT SPECIFICATION

(11) **EP 3 751 447 B1**
(45) Date of publication and mention of the grant of the patent: **19.11.2025**
(21) Application number: 19180304.8
(22) Date of filing: 14.06.2019
(51) Int. Cl.: G06V 10/82, G06V 10/98

(54) **METHODS OF DETERMINING A CLASSIFICATION OF A SIGNAL AND OF DETERMINING AN ARTEFACT IN AN IMAGE**
VERFAHREN ZUM BESTIMMEN EINER KLASSIFIKATION EINES SIGNALS UND ZUM BESTIMMEN EINES ARTEFAKTS IN EINEM BILD
PROCÉDÉS DE DÉTERMINATION D'UNE CLASSIFICATION D'UN SIGNAL ET DE DÉTERMINATION D'UN ARTEFACT DANS UNE IMAGE

(43) Date of publication of application: 16.12.2020
(73) Proprietor: Airbus Defence and Space GmbH, 82024 Taufkirchen (DE)
(72) Inventor: Rivière, Rémi, 82024 Taufkirchen (DE); Candeias, Henrique, 82024 Taufkirchen (DE); Krauser, Jasper, 82024 Taufkirchen (DE); Ferrato, Mathieu, 82024 Taufkirchen (DE)
(74) Representative: Frenkel, Matthias Alexander

(56) References cited:
- CANDEIAS HENRIQUE ET AL: "RTS effect detection in Sentinel-4 data", PROCEEDINGS OF SPIE; [PROCEEDINGS OF SPIE ISSN 0277-786X VOLUME 10524], SPIE, US, vol. 10402, 5 September 2017 (2017-09-05), pages 104021B - 104021B, XP060099197, ISBN: 978-1-5106-1533-5, DOI: 10.1117/12.2274310
- JOSEPH W DEROSE ET AL: "AUTOMATED IMAGE ARTIFACT IDENTIFICATION IN DARK ENERGY SURVEY CCD EXPOSURES", 22 September 2017 (2017-09-22), XP055653926, Retrieved from the Internet <URL:http://cs229.stanford.edu/proj2015/149_report.pdf> [retrieved on 20191218]
- VINCENT GOIFFON ET AL: "Investigation of Dark Current Random Telegraph Signal in Pinned PhotoDiode CMOS Image Sensors", ELECTRON DEVICES MEETING (IEDM), 2011 IEEE INTERNATIONAL, IEEE, 5 December 2011 (2011-12-05), pages 8.4.1 - 8.4.4, XP032095906, ISBN: 978-1-4577-0506-9, DOI: 10.1109/IEDM.2011.6131514
- R. ZHENG ET AL: "A Real-time Auto-detection Method for Random Telegraph Signal (RTS) Noise Detection in CMOS Active pixel sensors", JOURNAL OF INSTRUMENTATION, vol. 10, no. 07, 21 July 2015 (2015-07-21), GB, XP055643501, ISSN: 1748-0221, DOI: 10.1088/1748-0221/10/07/C07013

## Description

### Technical Field

The present invention relates to a method of determining a classification of a signal, a method of determining an artefact in an image, an apparatus configured to execute the method and a program storing instructions which, when executed by a computer, cause the computer to execute the method.

### Background

Random telegraphic signals (RTS) noise is also referred to as random telegraph noise (RTN), burst noise, bi-stable noise or noise stable at a number of signal levels. RTS noise is a type of electronic noise that occurs in many modern semiconductors. It consists of sudden step-like transitions between several voltage or current levels at unpredictable times. The most commonly invoked cause for RTS noise is a random trapping and release of charge carriers at thin film interfaces or at defect sites in a bulk semiconductor crystal.

Modern optical sensors often are made of semiconductor material and thus also are affected by the aforementioned RTS noise.

Stray light is often defined as light in an optical system which was not upon designing the system not intended. The light may originate from an intended light source, but may follow paths other than intended. Alternatively, it may be from a light source other than the intended light source. Stray light may set a working limit on the dynamic range of the optical system, limit the signal-to-noise ratio (SNR) or contrast ratio.

Thus, stray light is an important factor to consider when using modern optical sensors in order to obtain a good imaging signal.

Prior art in the field of RTS and image artefact detection is known from (a) CANDEIAS HENRIQUE ET AL, "RTS effect detection in Sentinel-4 data", PROCEEDINGS OF SPIE; PROCEEDINGS OF SPIE ISSN 0277-786X VOLUME 10524, SPIE, US, (20170905), vol. 10402, doi:10.1117/12.2274310, ISBN 978-1-5106-1533-5, pages 104021B - 104021B; (b) Joseph W Derose ET AL, "AUTOMATED IMAGE ARTIFACT IDENTIFICATION IN DARK ENERGY SURVEY CCD EXPOSURES"; and (c) R. ZHENG ET AL, "A Real-time Auto-detection Method for Random Telegraph Signal (RTS) Noise Detection in CMOS Active pixel sensors", JOURNAL OF INSTRUMENTATION, GB, (20150721), vol. 10, no. 07, doi:10.1088/1748-0221/10/07/C07013.

### Summary

The current invention is defined in the independent claims.

Disclosed are methods for classifying a signal measured by a pixel comprised in an optical sensor as a normal signal or as a random telegraph signal and for detecting artefacts caused by stray light when obtaining an image using an image sensor.

According to a first aspect, a method of determining a classification of a signal is provided. The method comprises acquiring pixel data. The pixel data describes a signal which was measured during a predetermined time interval using a pixel. The pixel is comprised in an optical sensor, for example an image sensor such as a camera sensor, a CCD or else. The term "optical sensor" user herein is to be understood as being a sensor configured to detect electromagnetic radiation, preferably in the infrared, ultra-violet and/or visible light range. The method further comprises automatically determining, based on the pixel data, a classification for the signal described by the pixel data. The classification is determined such that the signal is classified (automatically) as a normal signal or as a random telegraphic signal. To this end, for example a convolutional neural network is used. The convolutional neural network is for example trained beforehand using a training set comprising several training signals. These training signals are for example assigned to a given category such as "normal signal" or "random telegraph signal". In case the training signals are assigned to the category "random telegraphic signal", they may also be assigned to a certain parameter which characterizes the random telegraphic signal.

The method may further comprise automatically determining, based on the pixel data which describes a signal classified as a random telegraphic signal, at least one parameter. The at least one parameter characterizes the random telegraphic signal. The determining is for example performed using a convolutional neural network. In this case, those of the training signals used to train the convolutional neural network which are assigned to the category "random telegraphic signal" are also assigned to the parameter which characterizes the random telegraphic signal.

The parameter is at least one of a number of levels of the random telegraphic signal, an amplitude of a level of the random telegraphic signal, an amplitude of each level of the random telegraphic signal, an occurrence frequency of a level of the random telegraphic signal and an occurrence frequency of each level of the random telegraphic signal.

The method in one example further comprises measuring at least one electrical property of the pixel during the predetermined time interval as the signal. It may further comprise determining the pixel data describing the signal. The electrical property for example comprises at least one of an electrical voltage, an electrical current, an electrical resistance, an electrical power and an electrical capacitance.

The measuring during the predetermined time interval for example comprises measuring the at least one electrical property at periodic intervals during the predetermined time interval. For example, several frames are acquired by the optical sensor and a pixel value at each of the frames is used to determine a time-dependent pixel signal as the signal described by the pixel data.

The pixel data for example describes at least one additional signal measured during a predetermined time interval using an additional pixel comprised in the optical sensor. For example, the pixel data describes a plurality of pixel signals for a plurality of pixels comprised in the optical sensor, for example for all pixels comprised in the optical sensor.

The step of determining for example further comprises automatically determining a classification for the additional signal described by the pixel data such that the additional signal is classified automatically as a normal signal or as a random telegraphic signal, for example using the convolutional neural network. In other words, the classification may be performed for more than one signal, for example for all signals described by the pixel data. In each case, the same convolutional neural network can be used.

The method in one example further comprises determining a pixel map. The pixel map for example indicates which of the pixels comprised in the optical sensor were used to measure a signal classified as a random telegraphic signal. The pixel map may be output on a display device and/or represented in the form of a matrix indicating column(s) and/or row(s) of the aforementioned pixel(s). Based on the determined classification of the individual signals, it can be decided which pixel(s) are prone to generating a RTS. These pixels can then be neglected or the corresponding signals can be adjusted when obtaining measurements using the optical sensor. For example, any detected RTS-based transitions can be automatically removed. In other words, the RTS components contained in a signal may be removed / smoothed out. To this end, the determined parameter(s) describing the random telegraph signal can be used. Therefore, the influence of the RTS noise on measurements of the optical sensor can be minimized.

According to another aspect, a method of detecting an artefact in an image obtained by an image sensor is provided. The method comprises acquiring image data describing the image obtained by the image sensor. The image sensor is for example a camera, a CCD or else. The image sensor may be referred to as an optical sensor.

This method of detecting an artefact in an image can be combined with the method for classifying a signal mentioned above. The image data may be equal to the pixel data. The image data may be determined based on the pixel data. For example, an image is generated based on values of the signals comprised in the pixel data at a given point in time. For generating the image, at least one signal may be neglected which has been classified as a random telegraphic signal. Multiple images may be generated based on the pixel data for different points in time. After some of the pixels comprised in the optical sensor which were used to measure a signal classified as a random telegraphic signal have been identified, for example based on the pixel map, signals of these pixels may be discarded to generate the image described by the image data. In other words, signals of pixels which exhibit a random telegraphic signal may be neglected when obtaining the image. The resulting image data may then be used to detect an artefact in the image.

The method further comprises automatically detecting, based on the image data, the artefact in the image. The artefact was caused by stray light when obtaining the image with the image sensor. The detecting is for example performed using a convolutional neural network. As described above, the convolutional neural network may be trained beforehand using training sets of reference data.

In one example, the step of automatically detecting comprises automatically determining a shape and/or position of the artefact in the image. This determination may also be performed by the convolutional neural network. The shape may be an outline of the artefact. The position may be the position of a centre, a top, a left side, a right side and/or a bottom of the artefact.

For example, the image data describes a spatially resolved intensity of light having a fixed wavelength. In other words, the image may comprise a plurality of pixel values each of which indicates a certain intensity of a fixed wavelength. For example, the image comprises a matrix of pixel values each of which indicate a light intensity at a wavelength of 350nm. Of course, other wavelengths such as 200nm, 1000nm or else are possible. The wavelength does not need to be in region of visible light but may lie in an infrared range, in a high-frequency range such as an ultra-violet range or else.

The image data for example further describes an additional image. In this case, the step of automatically detecting the artefact may comprise automatically detecting an additional artefact in the at least one additional image. Also for the detection of the additional artefact, the convolutional neural network may be used. The additional artefact was caused by stray light when obtaining the additional image.

For example, the image and the additional image were obtained by the image sensor at different points in time. The artefact and the additional artefact may thus be caused by stray light of the same source which falls onto the image sensor at each of the different points in time, possibly at different locations.

The image data describing the image and the additional image for example describes a spatially resolved intensity of light having a fixed wavelength for each image, wherein the fixed wavelength is different from one image to the other. In particular, the image data describes a spatially resolved intensity of light having a fixed wavelength for the image and for the additional image, wherein the fixed wavelength is different from one image to the other. For example, the image comprises a matrix of pixel values each of which indicate a light intensity at a wavelength of 350nm. For example, the additional image comprises a matrix of pixel values each of which indicate a light intensity at a wavelength of 550nm. Of course, other wavelengths such as 200nm, 1000nm or else are possible. The wavelength does not need to be in region of visible light but may lie in an infrared range, in a high-frequency range such as an ultra-violet range or else.

According to an aspect of the invention apparatus is provided comprising a processing unit configured to execute one or both of the aforementioned methods. For example, the apparatus further comprises the optical sensor. The apparatus in one example acquires the pixel data from the optical sensor. It may acquire the image data from the optical sensor. Furthermore, the apparatus may comprise a computer as the processing unit.

According to another aspect of the invention, a computer program is provided comprising instructions which, when the program is executed by a computer, for example the computer comprised in the apparatus, cause the computer to perform the method steps of one or both of the aforementioned methods. Also provided is a program storage medium on which the program is stored, in particular in a non-transitory form, for example a program storage unit comprised in the apparatus. Also, a data stream is provided carrying information which represents the program.

### Brief Description of the Drawings

In the following, several advantageous embodiments of the present invention will be disclosed with reference to the drawings, wherein:
- Fig. 1: shows a schematic example of pixel data;
- Fig. 2: shows a signal described by the pixel data;
- Fig. 3: shows a second signal described by the pixel data;
- Fig. 4a: shows a third signal described by the pixel data;
- Fig. 4b: shows a histogram derived from the third signal shown in Fig. 4a;
- Fig. 5a: shows a fourth signal described by the pixel data;
- Fig. 5b: shows a histogram derived from the fourth signal shown in Fig. 5a;
- Fig. 6: shows a flow diagram of a first method;
- Fig. 7: shows a schematic overview of the first method;
- Fig. 8: shows two images described by image data;
- Fig. 9: shows a first image described by the image data;
- Fig. 10: shows a second image described by the image data;
- Fig. 11: shows a third image described by the image data;
- Fig. 12: shows a flow diagram of a second method; and
- Fig. 13: shows an apparatus according to an aspect of the invention.

### Detailed Description

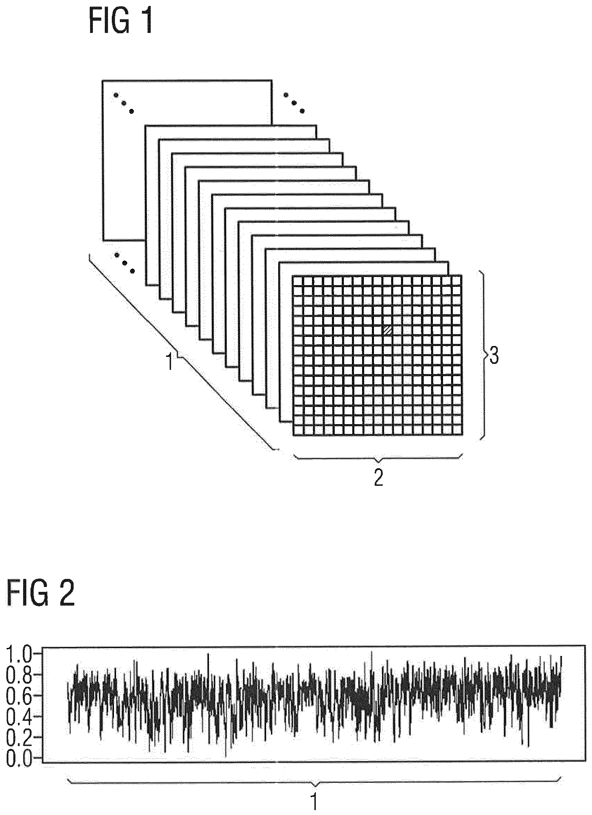

As is commonly known and optical sensor may comprise several pixels. In Fig. 1, a plurality of pixels arranged in columns 2 and in lines 3 is shown. Several frames 1 are indicated. The pixel data may describe a signal measured using a pixel comprised in the optical sensor. For example, a voltage level of pixel 4 is measured for each of the frames in the plurality of frames 1. The measurement results in a plurality of voltage levels which can be ordered frame by frame. In the current case, each of the frames is obtained at a different point in time. In particular, the frames 1 are obtained periodically. Using the plurality of voltage levels and time information describing at which point in time the respective frame was obtained, a time-dependent voltage signal for pixel 4 can be derived. This signal is shown in Fig. 2. Of course, other units such as a number of electrons, a number or energy of photons, or binary units might be measured instead of the voltage level of pixel 4.

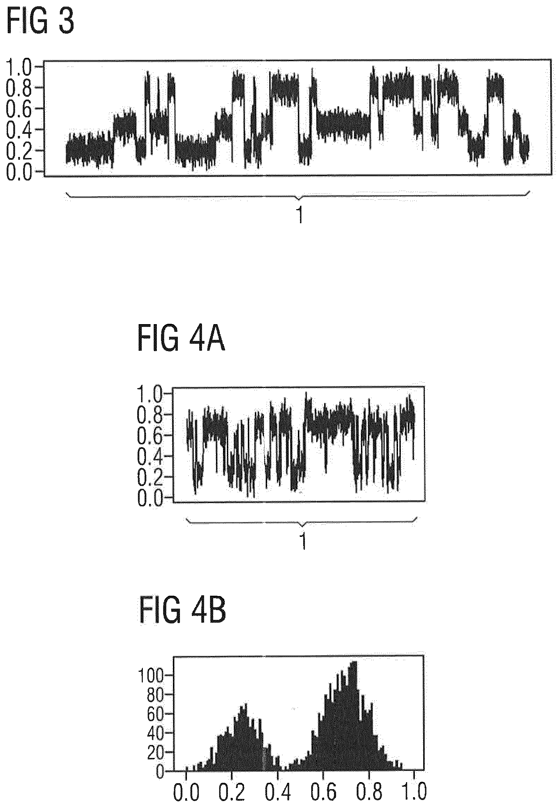

As can be seen from Fig. 2, the signal varies randomly during time. No specific voltage levels can be observed. In some cases however, a random telegraphic signal may be observed for a given pixel. Fig. 3 shows a signal described by the pixel data, which is a random telegraphic signal. As can be seen in Fig. 3, the signal varies between three different levels. Each level is defined by a certain range of amplitude. In the given example, each level is defined by a given voltage range, for example 0.1 to 0.3, 0.3 to 0.6 and 0.6 to 0.9. Note that the amplitude shown in Fig. 2, 3, 4a and 5a is normalised to a range of 0 to 1 in the current example. The normalization of the pixel signal before classifying the signal is advantageous but not essential. A problem with the signal shown in Fig. 3 is that instead of a completely random noise, several specific voltage levels are present. This may result in an erroneous detection result, for example in a false positive signal. In order to avoid such an error, it is advantageous to determine which pixel exhibits a random telegraphic signal.

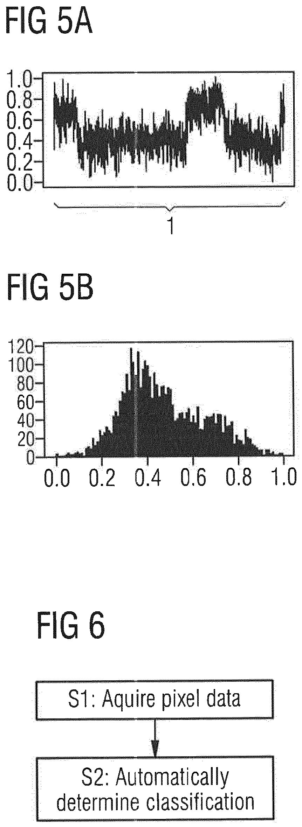

Using a convolution neural network, a given signal can be classified as a normal signal or as a random telegraphic signal. In addition, parameters characterising the random telegraphic signal can be derived from the signal. For example, a frequency distribution histogram can be derived from the random telegraphic signal. In case of a signal shown in Fig. 4A, the histogram may show several distinguishable peaks as shown in Fig. 4B. In some cases, as shown in Fig. 5A, the change between different voltage levels may not occur as often. However, also in this case a frequency distribution histogram can be derived from the signal, as shown in Fig. 5B. It is harder for a user to identify distinguishable peaks in the histogram shown in Fig. 5B compared to the histogram of Fig. 5A. Therefore, it is useful to apply a convolutional neural network to determine whether the signal is a normal signal or a random telegraphic signal. In addition, the convolutional neural network can be used to determine the aforementioned parameter characterising the random telegraphic signal. For example, an amplitude level, for example a voltage level, of the random telegraphic signal can be determined using the convolutional neural network. In addition or alternatively thereto, the number of levels and/or the occurrence of frequency on each level can be determined using the convolutional neural network.

Fig. 6 shows a flow diagram of the method. In a first step S1, pixel data is acquired. The pixel data describes a signal measured using a pixel comprised in the optical sensor. For example, the pixel data describes the signal shown in Fig. 2, 3, 4a or 5A. The signal described by the pixel data was measured during a predetermined time interval, for example during a time interval comprising all frames 1. In the next step S2, a classification for the signal is determined automatically. Thereby, the signal is classified as a normal signal or as a random telegraphic signal. In order to automatically determine the classification, a convolutional neural network can be used.

The determination of the classification can be performed from multiple signals described by the pixel data. For example, the pixel data describes a plurality of signals for a plurality of pixels comprised in the optical sensor. In this case, the classification of each of the signals measured using the plurality of pixels may be automatically determined based on the pixel data. Also, a pixel map may be determined which indicates which of the pixels comprised in the optical sensor exhibit a random telegraphic signal, i.e which pixels were used to measure a signal classified as a random telegraphic signal.

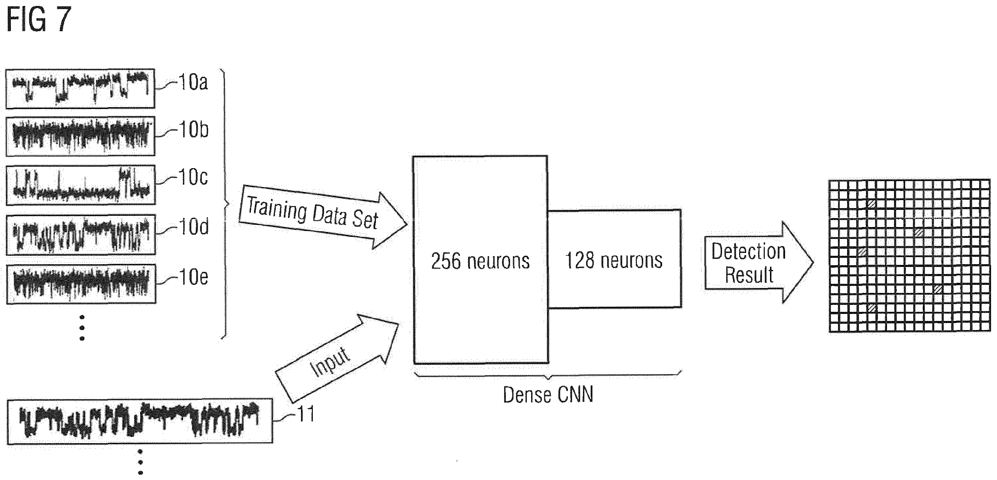

Fig. 7 shows a schematic overview of the method. The convolutional neural network comprises a first layer comprising 256 neurons and a second layer comprising 128 neurons. The convolutional neural network is denoted by the term "dense CNN". In order to train the convolutional neural network, a training dataset is used. In the shown example, the training dataset comprises signals 10a, 10b, 10c, 10d and 10e. It may comprise further signals. Each of the training signals is associated with a category such as "normal signal" and "random telegraphic signal". Furthermore, the signals comprised in the training dataset may be associated with one or more parameters characterising the random telegraphic signal. In the shown example, signals 10a, 10c and 10d are random telegraphic signals, whereas signals 10b and 10e are normal signals. As the parameter, the respective amplitude levels of the signals 10a, 10c and 10d can be used.

After training the dense CNN with the training dataset, the convolutional neural network is able to automatically determine the classification for an input signal. Therefore, after pixel data is acquired describing a signal 11, the convolutional neural network automatically determines the classification for the signal 11. As noted above, the determination may be performed for a plurality of signals described by the pixel data, for example for a plurality of signals obtained by measurements using a plurality of pixels comprised in the optical sensor, for example all pixels. After having determined the classification for these signals, a pixel map can be determined as shown on the right in Fig. 7. The pixel map may comprise a number of columns and rows of pixels which represent the individual pixels comprised in the optical sensor. Those pixels which show a random telegraphic signal can be highlighted in the RTS pixel map. These highlighted pixels are indicated as dark pixels in Fig. 7.

Subsequently, this identification of erroneous pixels can be used in order to obtain improved image data. For example, the signals of the RTS pixels may be discarded or smoothed. Also, the signals of the RTS pixels may be corrected using the at least one parameter determined as noted above. For example, a voltage may be subtracted from parts of the signal which are lying on a higher voltage level of a random telegraphic noise, whereas a voltage may be added to parts of the signal which are lying on a lower voltage level of a random telegraphic noise.

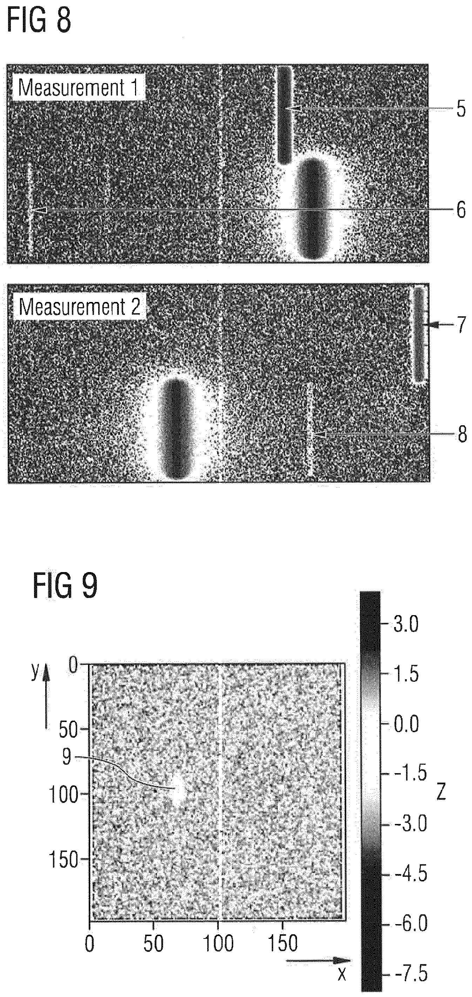

According to the second aspect, a method of detecting artefacts in an image obtained by an image sensor is provided. Fig. 8 shows two images obtained by the image sensor. The images are described by image data. The upper image shown in Fig. 8 is referred to as "Measurement 1", whereas the lower image is referred to as "Measurement 2". In the upper image, an artefact 5 and an artefact 6 can be identified. In the lower image, an artefact 7 and an artefact 8 can be identified. These artefacts result from unwanted pathways of light rays onto the optical sensor. In other words, the artefacts were caused by stray light when obtaining the image. In this case, the artefacts may also be referred to as ghost images. In order to improve the obtained images, it is useful to detect these artefacts. To this end, the image data describing the image obtained by the image sensor, i.e. the optical sensor, is acquired. The image data may be equal to the pixel data described above. The image data may be determined based on the pixel data, for example by discarding signals of pixels which have been classified as random telegraphic signals. Several images may be generated based on the pixel data for different points in time, using values of the signals at the different points in time, the signals being comprised in the pixel data. Subsequently, using a convolutional neural network, an artefact is automatically detected in the image. In the current case, artefacts 5, 6, 7 and 8 might be detected in the two images shown in Fig. 8.

The step of automatically detecting may comprise automatically determining a shape, for example an outline, a geometrical form, an area, a size and/or a position of the artefact in the image. The image may include a plurality of pixel values describing an intensity of electromagnetic radiation having a certain wavelength. In other words, the image data may describe a spatially resolved intensity of light having a fixed wavelength. The image may include a plurality of pixel values describing a spectrum of electromagnetic radiation. In the case of a plurality of images, the fixed wavelength may be different from one image to another. The images may alternatively or additionally be obtained at different points in time.

In the case of several images, the method may comprise acquiring image data describing the several images and automatically detecting an artefact in each of the images. For this purpose, a convolutional neural network can be used. A possible convolutional neural network comprises or consists of 18 layers with 64 to 4096 neurons. After training the convolutional neural network with a training set, for example a plurality of images obtained at different points in time, wherein each of the images is associated with an artefact, for example a shape and position of the artefact, the convolutional neural network is able to automatically detect an artefact in an image. Information on the evolution of an artefact, for example its movement, change in size, change in focus, change in intensity or else, may be used in order to predict the shape and/or position of the artefact in a subsequent image. The evolution of an artefact in an image can be predicted using the convolutional neural network. Therefore, the artefact can be detected more reliably in a subsequent image.

Fig. 9 shows an exemplary image described by the image data. The artefact 9 has a given position in the coordinate system X, Y. It also has a certain intensity indicated on the scale Z. The convolutional neural network is able to detect the artefact 9 from the image shown in Fig. 9.

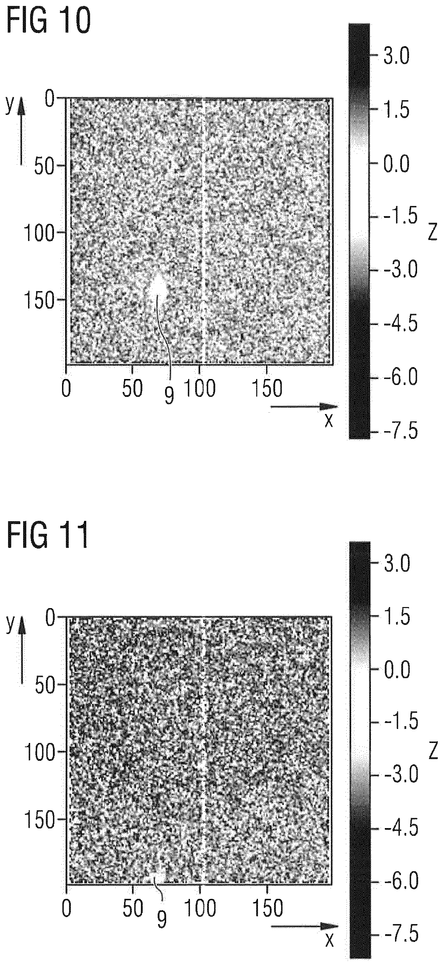

A subsequent image may also be obtained as shown in Fig. 10. Also this image may be described by the image data. The image shown in Fig. 10 may have been obtained by the optical sensor at a later point in time than the image shown in Fig. 9. The convolutional neural network may predict the shape and/or position of the artefact 9 in Fig. 10 based on the detection in the image shown in Fig. 9. For example, it may be known that an artefact always move into a certain direction and always exhibits a certain shape and/or position.

A further subsequent image may also be obtained as shown in Fig. 11. Also in this case, the shape and/or position of the artefact may be determined using the convolutional neural network and the detection of the artefact in the image of Fig. 9 and/or Fig. 10. This enables a tracking of the artefact in subsequent images.

Note that instead of images obtained at different points in time, a different set of images can be used. For example, a first image representing intensity values at a first wavelength, a second image representing intensity values at a larger wavelength, and third image representing intensity values at an even larger wavelength can be used as the images described by the image data.

Based on the detected artefact, the image data may be corrected. For example, the artefacts may be removed from the image data using interpolation and/or extrapolation techniques. The artefact may also be tagged as a region in the image which may not be used for further processing such as object detection. Therefore, this method allows improving a detected image signal.

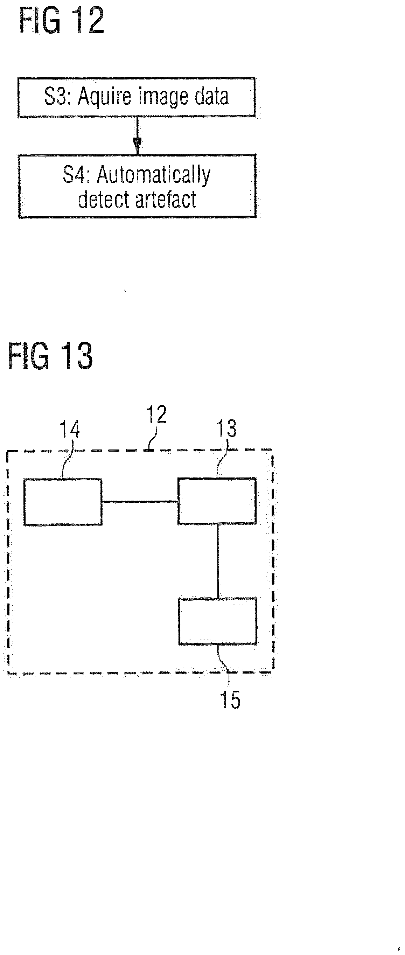

Fig. 12 shows a flow diagram of the method of detecting an artefact in an image. In step S3, image data is acquired which describes the image obtained by the image sensor. In a subsequent step S4, as described above, the artefact is automatically detected based on the image data. To this end, the convolutional neural network can be used.

The method for determining a classification of a signal may be combined with the method of detecting an artefact. For example, at a first stage, the method for determining a classification of a signal is performed, for example to discard any RTS pixels. In a subsequent step, the method of detecting an artefact may be executed, for example in order to obtain an improved image. In this case, the image data may comprise the pixel data and/or the pixel data may comprise the image data.

Fig. 13 shows an apparatus according to an aspect of the invention. The apparatus comprises a processing unit 13 which can also be referred to as a computer. It also comprises an optical sensor 14, which can also be referred to as an image sensor, a camera or else. Also, the apparatus may comprise a storage medium 15 which may serve as a program storage medium. The apparatus is configured to execute one or both of the aforementioned methods alone or in combination.

## Claims

1. A method of determining a classification of a signal, the method comprising:
acquiring pixel data describing a signal, wherein the signal was measured during a predetermined time interval using a pixel comprised in an optical sensor (14);
automatically determining, based on the pixel data, a classification for the signal described by the pixel data such that the signal is classified as a normal signal or as a random telegraphic signal, RTS, using a convolutional neural network;
automatically determining, based on the pixel data which describes a signal classified as a RTS, at least one parameter which characterizes the RTS, using the convolutional neural network; and
automatically adjusting the pixel signal classified as a RTS by removing, based on the at least one parameter, RTS-based transitions contained in the pixel signal classified as a RTS.

2. The method of claim 1, wherein the parameter is at least one of the following:
- a number of levels of the random telegraphic signal;
- an amplitude of a level of the random telegraphic signal;
- an amplitude of each level of the random telegraphic signal;
- an occurrence frequency of a level of the random telegraphic signal; and
- an occurrence frequency of each level of the random telegraphic signal.

3. The method of claim 1 or 2, further comprising:
measuring at least one electrical property of the pixel during the predetermined time interval as the signal; and
determining the pixel data describing the signal, wherein
the electrical property comprises at least one of an electrical voltage, an electrical current, an electrical resistance, an electrical power and an electrical capacitance.

4. The method of any of claims 1 to 3, wherein
the measuring during the predetermined time interval comprises measuring the at least one electrical property at periodic intervals during the predetermined time interval.

5. The method of any of claims 1 to 4, wherein
the pixel data describes at least one additional signal measured during a predetermined time interval using an additional pixel comprised in the optical sensor (14), wherein
the step of determining further comprises automatically determining a classification for the additional signal described by the pixel data such that the additional signal is classified automatically as a normal signal or as a random telegraphic signal, using the convolutional neural network.

6. The method of claim 5, further comprising:
determining a pixel map indicating which of the pixels comprised in the optical sensor (14) were used to measure a signal classified as a random telegraphic signal.

7. The method of claim 5 or 6, further comprising:
generating image data comprising an image, based on pixel signals classified as a normal signal;
automatically detecting, based on the image data, an artefact (5, 6, 7, 8, 9) in the image, wherein the artefact (5, 6, 7, 8, 9) was caused by stray light when obtaining the pixel data and wherein the detecting is performed using a convolutional neural network.

8. The method of claim 7, wherein the image comprised in the image data is generated further based on the adjusted pixel signal or by neglecting pixel signals classified as RTS signal.

9. The method of claim 7 or 8, wherein the step of automatically detecting comprises:
automatically determining a shape and/or position of the artefact (5, 6, 7, 8, 9) in the image.

10. The method of any of claims 7 to 9, wherein
the image data describes a spatially resolved intensity of light having a fixed wavelength.

11. The method of any of claims 7 to 10,
wherein the image data further comprises an additional image and
wherein the step of automatically detecting the artefact (5, 6, 7, 8, 9) comprises:
automatically detecting an additional artefact in the at least one additional image, wherein the additional artefact was caused by stray light when obtaining the additional image.

12. The method of claim 11, wherein
the image and the additional image are based on pixel signals obtained by the image sensor (14) at different points in time.

13. The method of claim 11 or 12, wherein
the image data describes a spatially resolved intensity of light having a fixed wavelength for the image and for the additional image, wherein the fixed wavelength is different from one image to the other.

14. An apparatus (12) comprising a processing unit (13) configured to execute the method of any of claims 1 to 13.

15. A computer program comprising instructions which, when the program is executed by a computer (13), cause the computer (13) to perform the method steps of the method according to any one of claims 1 to 13

## Patentansprüche

1. Verfahren zum Bestimmen einer Klassifikation eines Signals, wobei das Verfahren umfasst:
Erfassen von Pixeldaten, die ein Signal beschreiben, wobei das Signal während eines vorgegebenen Zeitintervalls unter Verwendung eines in einem optischen Sensor (14) enthaltenen Pixels gemessen wurde;
Automatisches Bestimmen einer Klassifikation für das durch die Pixeldaten beschriebene Signal basierend auf den Pixeldaten, sodass das Signal unter Verwendung eines neuronalen Faltungsnetzwerks als ein normales Signal oder als ein zufälliges Telegrafensignal, RTS, klassifiziert wird;
Automatisches Bestimmen mindestens eines Parameters, der das RTS charakterisiert, basierend auf den Pixeldaten, die ein als ein RTS klassifiziertes Signal beschreiben, unter Verwendung des neuronalen Faltungsnetzwerks; und
Automatisches Anpassen des als ein RTS klassifizierten Pixelsignals durch Entfernen von RTS-basierten Übergängen, die im als ein RTS klassifizierten Pixelsignal enthalten sind, basierend auf dem mindestens einen Parameter.

2. Verfahren nach Anspruch 1, wobei der Parameter mindestens einer der folgenden ist:
eine Anzahl von Pegeln des zufälligen Telegrafensignals;
eine Amplitude eines Pegels des zufälligen Telegrafensignals;
eine Amplitude jedes Pegels des zufälligen Telegrafensignals;
eine Häufigkeit des Auftretens eines Pegels des zufälligen Telegrafensignals; und
eine Häufigkeit des Auftretens jedes Pegels des zufälligen Telegrafensignals.

3. Verfahren nach Anspruch 1 oder 2, ferner umfassend:
Messen mindestens einer elektrischen Eigenschaft des Pixels während des vorgegebenen Zeitintervalls als das Signal; und
Bestimmen der das Signal beschreibenden Pixeldaten, wobei
die elektrische Eigenschaft mindestens eine von einer elektrischen Spannung, einem elektrischen Strom, einem elektrischen Widerstand, einer elektrischen Leistung und einer elektrischen Kapazität umfasst.

4. Verfahren nach einem der Ansprüche 1 bis 3, wobei
das Messen während des vorgegebenen Zeitintervalls ein Messen der mindestens einen elektrischen Eigenschaft in periodischen Intervallen während des vorgegebenen Zeitintervalls umfasst.

5. Verfahren nach einem der Ansprüche 1 bis 4, wobei
die Pixeldaten mindestens ein zusätzliches Signal beschreiben, das während eines vorgegebenen Zeitintervalls unter Verwendung eines im optischen Sensor (14) enthaltenen zusätzlichen Pixels gemessen wurde, und wobei
der Schritt des Bestimmens ferner ein automatisches Bestimmen einer Klassifikation für das durch die Pixeldaten beschriebene zusätzliche Signal umfasst, sodass das zusätzliche Signal unter Verwendung des neuronalen Faltungsnetzwerks automatisch als ein normales Signal oder als ein zufälliges Telegrafensignal klassifiziert wird.

6. Verfahren nach Anspruch 5, ferner umfassend:
Bestimmen einer Pixelkarte, die angibt, welche der im optischen Sensor (14) enthaltenen Pixel zum Messen eines als ein zufälliges Telegrafensignal klassifizierten Signals verwendet wurden.

7. Verfahren nach Anspruch 5 oder 6, ferner umfassend:
Erzeugen von Bilddaten, die ein Bild umfassen, basierend auf als ein normales Signal klassifizierten Pixelsignalen;
automatisches Erkennen eines Artefakts (5, 6, 7, 8, 9) im Bild basierend auf den Bilddaten, wobei das Artefakt (5, 6, 7, 8, 9) durch Streulicht beim Erfassen der Pixeldaten verursacht wurde und wobei das Erkennen unter Verwendung eines neuronalen Faltungsnetzwerks durchgeführt wird.

8. Verfahren nach Anspruch 7, wobei das in den Bilddaten enthaltene Bild ferner basierend auf dem angepassten Pixelsignal oder durch Vernachlässigung von als RTS-Signal klassifizierten Pixelsignalen erzeugt wird.

9. Verfahren nach Anspruch 7 oder 8, wobei der Schritt des automatischen Erkennens Folgendes umfasst:
automatisches Bestimmen einer Form und/oder Position des Artefakts (5, 6, 7, 8, 9) im Bild.

10. Verfahren nach einem der Ansprüche 7 bis 9, wobei
die Bilddaten eine räumlich aufgelöste Intensität von Licht mit einer festen Wellenlänge beschreiben.

11. Verfahren nach einem der Ansprüche 7 bis 10,
wobei die Bilddaten ferner ein zusätzliches Bild umfassen und
wobei der Schritt des automatischen Erkennens des Artefakts (5, 6, 7, 8, 9) Folgendes umfasst:
automatisches Erkennen eines zusätzlichen Artefakts in mindestens einem zusätzlichen Bild, wobei das zusätzliche Artefakt durch Streulicht beim Aufnehmen des zusätzlichen Bilds verursacht wurde.

12. Verfahren nach Anspruch 11,
wobei das Bild und das zusätzliche Bild auf Pixelsignalen basieren, die vom Bildsensor (14) zu unterschiedlichen Zeitpunkten aufgenommen wurden.

13. Verfahren nach Anspruch 11 oder 12,
wobei die Bilddaten eine räumlich aufgelöste Intensität von Licht mit einer festen Wellenlänge für das Bild und das zusätzliche Bild beschreiben, wobei die feste Wellenlänge von einem Bild zum anderen unterschiedlich ist.

14. Vorrichtung (12) mit einer Verarbeitungseinheit (13), die zur Ausführung des Verfahrens nach einem der Ansprüche 1 bis 13 eingerichtet ist.

15. Computerprogramm mit Anweisungen, die, wenn das Programm von einem Computer (13) ausgeführt wird, den Computer (13) veranlassen, die Verfahrensschritte des Verfahrens nach einem der Ansprüche 1 bis 13 durchzuführen.

## Revendications

1. Procédé de détermination d'une classification de signal, le procédé comprenant:
l'acquisition de données de pixel décrivant un signal, dans lequel le signal a été mesuré pendant un intervalle de temps prédéterminé à l'aide d'un pixel compris dans un capteur optique (14);
la détermination automatique, sur la base des données de pixel, d'une classification pour le signal décrit par les données de pixel, de telle sorte que le signal soit classé comme signal normal ou comme signal télégraphique aléatoire, RTS, à l'aide d'un réseau neuronal convolutif;
la détermination automatique, sur la base des données de pixel qui décrivent un signal classé comme RTS, d'au moins un paramètre qui caractérise le RTS, à l'aide du réseau neuronal convolutif; et
l'ajustement automatique du signal de pixel classé comme RTS en supprimant, sur la base de l'au moins un paramètre, des transitions basées sur RTS contenues dans le signal de pixel classé comme RTS.

2. Procédé selon la revendication 1, dans lequel, le paramètre est l'au moins un parmi les éléments suivants:
- un certain nombre de niveaux du signal télégraphique aléatoire;
- une amplitude d'un niveau du signal télégraphique aléatoire;
- une amplitude de chaque niveau du signal télégraphique aléatoire;
- une fréquence d'occurrences d'un niveau du signal télégraphique aléatoire;
et
- une fréquence d'occurrences de chaque niveau du signal télégraphique aléatoire.

3. Procédé selon la revendication 1 ou 2, comprenant en outre:
la mesure d'au moins une propriété électrique du pixel pendant l'intervalle de temps prédéterminé en tant que signal; et
la détermination des données de pixel décrivant le signal, dans lequel
la propriété électrique comprend au moins l'un des éléments suivants: une tension électrique, un courant électrique, une résistance électrique, une puissance électrique et une capacité électrique.

4. Procédé selon l'une quelconque des revendications 1 à 3, dans lequel
la mesure pendant l'intervalle de temps prédéterminé consiste à mesurer l'au moins une propriété électrique à intervalles périodiques pendant l'intervalle de temps prédéterminé.

5. Procédé selon l'une quelconque des revendications 1 à 4, dans lequel
les données de pixel décrivent au moins un signal supplémentaire mesuré pendant un intervalle de temps prédéterminé à l'aide d'un pixel supplémentaire compris dans le capteur optique (14), dans lequel
l'étape de détermination consiste en outre à déterminer automatiquement une classification pour le signal supplémentaire décrit par les données de pixel, de sorte que le signal supplémentaire soit classé automatiquement comme signal normal ou comme signal télégraphique aléatoire, à l'aide du réseau neuronal convolutif.

6. Procédé selon la revendication 5, comprenant en outre:
la détermination d'une carte de pixels indiquant lesquels pixels compris dans le capteur optique (14) ont été utilisés pour mesurer un signal classé comme signal télégraphique aléatoire.

7. Procédé selon la revendication 5 ou 6, comprenant en outre:
la génération de données d'image comprenant une image, sur la base de signaux de pixels classés comme signaux normaux;
la détection automatique, sur la base des données d'image, d'un artefact (5, 6, 7, 8, 9) dans l'image, dans lequel l'artefact (5, 6, 7, 8, 9) a été causé par une lumière parasite lors de l'obtention des données de pixels et dans lequel la détection est effectuée à l'aide d'un réseau neuronal convolutif.

8. Procédé selon la revendication 7, dans lequel l'image comprise dans les données d'image est générée en outre sur la base du signal de pixel ajusté ou par omission des signaux de pixel classés comme signal RTS.

9. Procédé selon la revendication 7 ou 8, dans lequel l'étape de détection automatique comprend consiste à:
déterminer automatiquement une forme et/ou une position de l'artefact (5, 6, 7, 8, 9) dans l'image.

10. Procédé selon l'une quelconque des revendications 7 à 9, dans lequel
les données d'image décrivent une intensité lumineuse à résolution spatiale ayant une longueur d'onde fixe.

11. Procédé selon l'une quelconque des revendications 7 à 10,
dans lequel les données d'image comprennent en outre une image supplémentaire et
dans lequel l'étape consistant à détecter automatiquement l'artefact (5, 6, 7, 8, 9) consiste à:
détecter automatiquement un artefact supplémentaire dans l'au moins une image supplémentaire, dans lequel l'artefact supplémentaire a été causé par une lumière parasite lors de l'obtention de l'image supplémentaire.

12. Procédé selon la revendication 11, dans lequel
l'image et l'image supplémentaire sont basées sur des signaux de pixel obtenus par le capteur d'image (14) à différents moments.

13. Procédé selon la revendication 11 ou 12, dans lequel
les données d'image décrivent une intensité lumineuse à résolution spatiale ayant une longueur d'onde fixe pour l'image et pour l'image supplémentaire, la longueur d'onde fixe étant différente d'une image à l'autre.

14. Appareil (12) comprenant une unité de traitement (13) configurée pour mettre en œuvre le procédé selon l'une quelconque des revendications 1 à 13.

15. Programme informatique comprenant des instructions qui, lorsque le programme est exécuté par un ordinateur (13), amènent l'ordinateur à réaliser les étapes de procédé du procédé selon l'une quelconque des revendications 1 à 13.
